# EUROPEAN PATENT APPLICATION

(11) **EP 2 806 340 A1**
(43) Date of publication of application: **26.11.2014**
(21) Application number: 14169462.0
(22) Date of filing: 22.05.2014
(51) Int. Cl.: G06F 3/041, G06F 3/0488

(54) **Touch control method and electronic device supporting the same**

(30) Priority: 22.05.2013 KR 20130057724
(71) Applicant: Samsung Electronics Co., Ltd, Gyeonggi-do 443-742 (KR)
(72) Inventor: Kim, Jinwon, 443-742 Gyeonggi-do (KR)
(74) Representative: Gover, Richard Paul

(57) **Abstract**

Disclosed are a touch control method and an electronic device supporting the same. The touch control method includes: a management operation of a communication unit in an activation state of a touch module; and a processing operation for invalidating a touch event occurring in the touch module when the communication unit transmits a specific signal.

## Description

### BACKGROUND OF THE INVENTION

### 1. Field of the invention

The present invention relates generally to electronic device management, and more particularly, to touch control of an electronic device.

### 2. Description of the Prior Art

Recently, an electronic device supports management of various user functions based on the development of a hardware technology. A conventional electronic device provides an input device in order to generate an input signal for device management.

### SUMMARY OF THE INVENTION

The present invention provides a touch control method of providing an improved touch control function and an electronic device supporting the same.

In accordance with an aspect of the present invention, an electronic device is provided. The electronic device includes: a communication unit for transmitting a specific signal; a touch module for generating a touch event based on a touch; and a control unit for invalidating a touch event occurring in the touch module while the specific signal is being transmitted from the communication unit.

In accordance with another aspect of the present invention, an electronic device is provided. The electronic device includes: a communication unit for transmitting a specific signal; a touch module for generating a touch event based on a touch; and an error control line for connecting the communication unit to the touch module, wherein, when the specific signal is received through the error control line, the touch module invalidates the touch event.

In accordance with another aspect of the present invention, a touch control method is provided. The touch control method includes: a management operation of a communication unit in an activation state of a touch module; and a processing operation for invalidating a touch event occurring in the touch module when the communication unit transmits a specific signal.

As described above, by providing the touch control method and the electronic device supporting the same according to the present invention, it is possible to support an improved touch control function.

### BRIEF DESCRIPTION OF THE DRAWINGS

The above and other objects, features and advantages of the present invention will be more apparent from the following detailed description in conjunction with the accompanying drawings, in which:
FIG. 1 is a diagram schematically illustrating a configuration of an electronic device to which a touch function of the present invention is applied;
FIG. 2 is a detailed diagram illustrating a configuration of a control unit of an electronic device according to an embodiment of the present invention;
FIG. 3 is a diagram for explaining an example of touch control according to an embodiment of the present invention;
FIG. 4 is a diagram for explaining another example of touch control according to an embodiment of the present invention;
FIG. 5 is a truth table for explaining touch control according to an embodiment of the present invention; and
FIG. 6 is a diagram for explaining a touch cotnrol method according to an embodiment of the present invention.

### DETAILED DESCRIPTION OF THE EXEMPLARY EMBODIMENTS

Hereinafter, embodiments of the present invention will be described in more detail with reference to the accompanying drawings.

In describing embodiments of the present disclosure, a description will be omitted of the technical contents that are well known in the technical field, to which the present disclosure pertains, and are not directly related to the present disclosure. Also, the descriptions of the component elements that have substantially identical configurations and functions will be omitted.

For the same reason, in the accompanying drawings, some elements may be exaggerated, omitted, or schematically illustrated, and a size of each element may not precisely reflect the actual size thereof. Thus, the present disclosure is not limited by the relative size or interval drawn in the accompanying drawings.

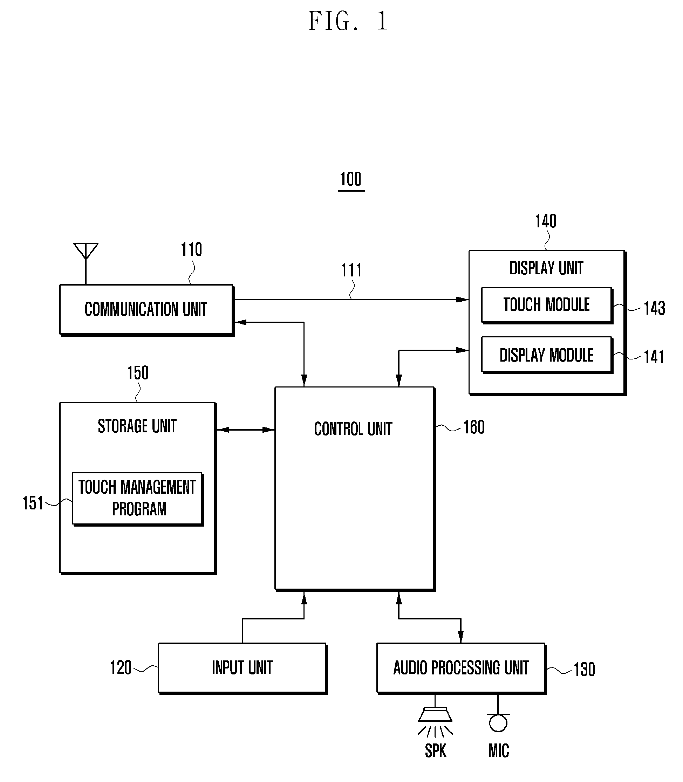

FIG. 1 is a diagram illustrating an example of a configuration of an electronic device to which a touch control function according to an embodiment of the present invention is applied.

Referring to FIG. 1, an electronic device 100 of the present invention may include a communication unit 110, an input unit 120, an audio processing unit 130, a display unit 140, a storage unit 150, and a control unit 160.

The electronic device 100 having such a configuration may control a touch furnciton of the display unit 140 during at least a part of a management period of the communication unit 110 such that occurrence of a non-desired touch event or applcation of a touch event may be processed. Accordingy, the electronic device 100 of the present invention may effectively process a touch error that may occurr in the management period of the communication unit 110.

The communication unit 110 of the present invention may include a mobile communication module for supporting a mobile communication function. For example, the communication unit 110 may include at least one communication module that supports various communication standards such as a GSM module, a WCDMA module, an OFDMA module, or a TDMA module, or communication schemes. When the electronic device 100 supports the mobile communication function in a default manner, the communication unit 110 may be initialized in a turn-on process of the electronic device 100 and may camp on a specific base station through peripheral search. Furthermore, the communication unit 110 may have a reception standby state. In addition, the communication unit 110 may support a process for a communication call connection according to user manipulation or schedule information set in advance. In a communication call connection trial process, the communication unit 110 may transmit a predetermined signal to the base station. Furthermore, also in a communication call connection process, the communication unit 110 may transmit a predetermined signal to the base station. For example, in a communication call processing process, the communication unit 110 may transmit a RAMP signal or a vRamp signal to the base station. The RAMP signal may be an example of a signal that is transmitted from the communication unit 110 to the base station according to a transmisison cycle. That is, the RAMP signal may be called another name due to reasons of a communication standard of the communication unit 110, a change in various types of hardware such as a communication module, name assignment of a designer, and the like. The RAMP signal may be a pulse signal that is periodically transmitted in a signal transmisison process. For a specific signal of the communication unit 110 that generates an error in a touch module 143, the RAMP signal, a RAMP signal generator that generates the RAMP signal, and the like are described in the present invention; however, the present invention is not limited thereto. That is, in a touch control technology applied to the present invention, an error control line is connected to a generator, which generates a management signal of the communication unit 110 that generates an error in the touch module 143, or a path, to which the corresponding signal is transferred, through various experiments and inspections, and the signal is transferred to the control unit 160 or a touch management part, so that an error may be prevented from occurring in the touch module 143. The touch management part may be a driving module that manages the touch module 143. Hereinafter, the touch management part is classified into a panel management part, a key management part and the like according to the implementation of the touch module 143 for explanation.

In the above description, the communication unit 110 includes a mobile communication module; however, the present invention is not limited thereto. That is, the communication unit 110 may support at least one of various communication schemes such that a specific device and a communication channel desired by a user may be formed. The communication unit 110 may include a communication module using at least one of wire and wirelss communication schemes. For example, the communication unit 110 may include at least one of various wire interface modules such as a USB interface module, a micro USB interface module, or a UART interface module. Furthermore, the communication unit 110 may include at least one of short range communication interfaces such as a Bluetooth communication interface module or a Zigbee communication interface module.

The input unit 120 may generate an input signal to transfer the input signal to the control unit 160 according to user control. Such an input unit 120 may include various devices such as a key button, a mouse, a physical touch keypad, a drawing pad, or a voice recognition-based voice input device. The input unit 120 may generate an input signal for turning on the electronic device 100, an input signal for activating functions of the communication unit 110, and the like according to user manipulation. The generated input signal may be provided to the control unit 160. In the present invention, the touch module 143 is included in the display unit 140, but may also be included in the input unit 120 in terms of generating a touch event for user input.

The audio processing unit 130 may process an audio signal of the electronic device 100. To this end, the audio processing unit 130 may include at least one speaker. When the electronic device 100 includes an audio signal collection function, the audio processing unit 130 may include a microphone. The audio signal collected by the audio processing unit 130 may be provided to the control unit 160. The audio processing unit 130 may support the output of various audio signals related to the management of the communication unit 110. For example, the audio processing unit 130 may output announcement sound, effect sound, ring tone and the like that report a communication call connection request received from another device. Furthermore, the audio processing unit 130 may process the transmission of an audio signal collected after a communication call is connected according to the management of the communication unit 110, and the output of an audio signal transmitted by another device. The audio processing unit 130 may output announcement sound that reports event error processing of the touch module 143 for a signl transmission cycle defined in advance in the management of the communication unit 110. The amplitude of the audio signal output by the aforementioned audio processing unit 130 may be adjusted or the audio signal may be muted, according to user control.

The display unit 140 may support various types of screen output of the electronic device 100. Furthermore, the display unit 140 may provide the control unit 160 with a touch event in the touch module 143 arranged to correspond to a screen. Such a display unit 140 may include the touch module 143 and a display module 141.

The display module 141 may output various screens according to the management of the electronic device 100. For example, the display module 141 may output a screen corresponding to an application function being activated such as a standby screen, a menu screen, an icon screen, and a lock screen. The display module 141 may output an icon selection screen, a phone book screen and the like for the management of the electronic device 100. The display module 141 may output a communication call connection request screen received or being transmitted. The display module 141 may output various types of information representing a state in which a touch error processing function of the present invention is being applied. The touch error processing function may be provided in a default manner or according to a user setting. When the touch error processing function is applied, the display module 141 may output an indicator, an icon, a text and the like that report the application of the touch error processing function. At this time, the display module 141 may always output information, which reports that the touch error processing function is being applied, through a state bar area arranged at an upper end of the display module 141 or another area. Alternatively, when an activation request of the communication unit 110 is generated, the display module 141 may output at least one of a text and an image which report that the touch error processing function is being applied.

The touch module 143 may be arranged at least one of an upper portion and a lower portion of the display module 141. The touch module 143 may be provided with the same size as an actual screen size of the display module 141. Alternatively, the touch module 143 may be provided with a size larger than an actual screen of the display module 141. The actual screen may be an area in which an image is displayed. An error control line 111 may be arranged between the touch module 143 and the communication unit 110. Alternatively, the error control line 111 may be connected to a logic circuit provided separately from the communication unit 110. An output line of the touch module 143 may be connected to the logic circuit.

Accoridng to another embodiment, the error control line 111 may be a line through which the aforementioned transmission signal cycle information is provided to the touch module 143. At least one error control line 111 may be provided according to the type of the touch module 143. The touch module 143 may provide the control unit 160 with a touch event based on a user touch. Accoridng to another embodiment, the touch module 143 may be designed not to provide the control unit 160 with the touch event while the transmission signal cycle information is being provided. Alternatively, in a design scheme in which the error control line 111 is not connected to the touch module 143, whenever the touch event is generated, the touch module 143 may provide the control unit 160 with the corresponding touch event.

In the present invention as described above, a transmission signal of the communication unit 110 and a touch event can be confirmed, and a touch event generated while the transmission signal is being transmitted can be processed as an error. Accordingly, it is possible to remove an error of a touch event that may occur in the management process of the communication unit 110.

The storage unit 150 is an element that stores various types of information related to the management of the electronic device 100. For example, the storage unit 150 may store an operating system required for the management of the electronic device 100, and an application program related to various user functions. The storage unit 150 may store a touch management program 151 in order to support the touch control function of the present invention.

The touch management program 151 may include various routines related to the touch control of the present invention. For example, the touch management program 151 may include a routine for activating the touch module 143 when a turn-on input signal of the display unit 140 is generated, and a routine for processing an error of the touch module 143 when an activation request of the communication unit 110 is generated. The routines included in the touch management program 151 may be loaded to the control unit 160 and be used as processes for supporting the touch control function. Alternatively, the touch management program 151 may be embedded in the control unit 160.

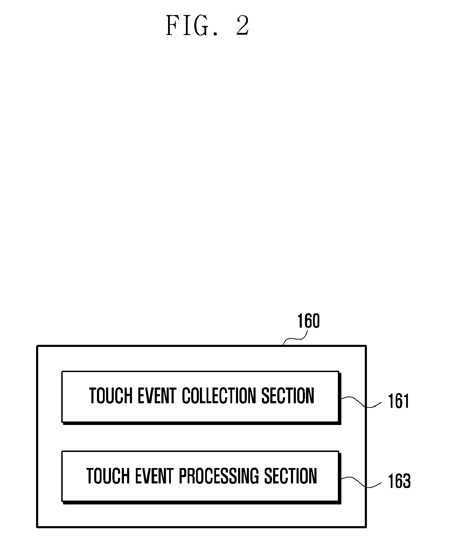

The control unit 160 may support various types of signal processing and data transfer for the management of the electronic device 100 of the present invention. The control unit 160 may support signal processing and data processing for supporting the touch control function of the present invention. The control unit 160 will be described in more detail with reference to FIG. 2.

FIG. 2 is a detailed diagram illustrating a configuration of the control unit 160 amont the elements of the electronic device 100 of the present invention.

Referring to FIG. 2, the control unit 160 may include a touch event collection section 161 and a touch event processing section 163.

The touch event collection section 161 may collect a touch event that is generated in the touch module 143. The touch event collection section 161 may provide the touch event processing section 163 with the collected touch event. The touch event collection section 161 may provide the touch event processing section 163 with information on a type of a collected touch, a touch position and the like. The touch event collection section 161 may collect various touch events according to a type of the touch module 143. For example, when the touch module 143 includes a panel module and a key module, the touch event collection section 161 may collect each touch event from each module. When the collected touch events are transferred, the touch event collection section 161 may transfer identification information of a module in which a corresponding touch event has occurred.

The touch event processing section 163 may confirm whether there is an activation request of the communication unit 110 or the communication unit 110 is in an activation state. When the communication unit 110 is not in the activation state or there is no activation request of the communication unit 110, the touch event processing section 163 may normally process a touch event provided by the touch event collection section 161. For example, when a touch event for calling a phone book occurs, the touch event processing section 163 may control a corresponding phone book screen to be output to the displya module 141. Furthermore, the touch event processing section 163 may support an event process based on the occurrence of a touch event for calling a specific web page, a touch event for requesting web page scroll or page switching, and the like.

When there is the activation request of the communication unit 110 or the communication unit 110 is in the activation state, the touch event processing section 163 may perform an error process for a touch event. For example, the touch event processing section 163 may collect transmission signal cycle information of the communication unit 110. Furthermore, the touch event processing section 163 may invalidate a touch event having occurred at the time point at which a transmission signal is transmitted. The transmission signal may be a RAMP signal for a communication call connection. At least one of a signal generator of the communication unit 110, which generates the RAMP signal and a path, through which the RAMP signal is transferred, may be connected to the error control line 111.

A communication-related transmission signal may be transmitted at a predetermined cycle until a communication call is connected. Furthemore, the communication-related transmission signal may also be transmitted at a predetermined cycle in a communication connection process. Accordingly, when the communication-related transmission signal is output at a predetermined cycle, the touch event processing section 163 may invalidate a touch event having occurred at a correponding cycle. The communication-related transmission signal may be directly provided from the communication unit 110. Alternatively, according to the embodiment of the present invention, the communication unit 110 may be directly provided in the touch module 143. When a hardware configuration includd in the touch module 143 receives the communication-related transmission signal from the communication unit 110, the touch event collection section 161 may not receive a touch event at a cycle of the communication-related transmission signal. In this case, the touch event processing section 163 may not support a separate error processing function.

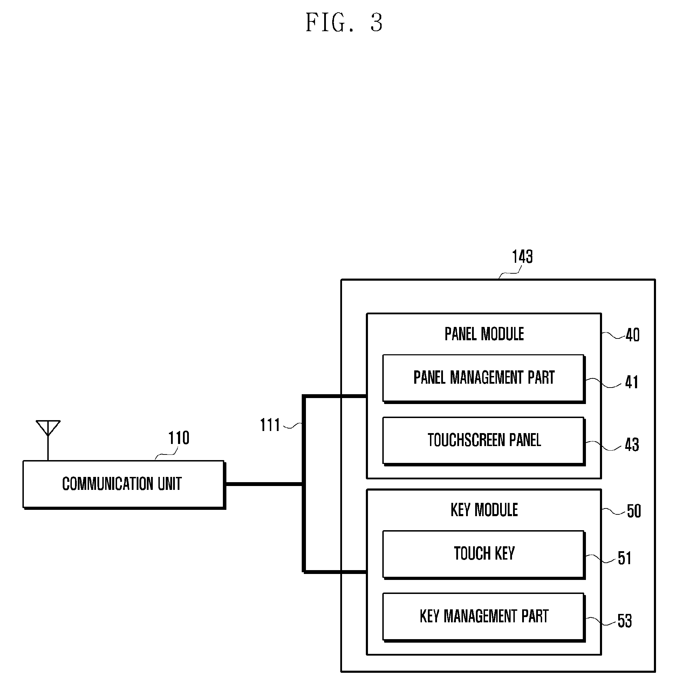

FIG. 3 is a diagram separately illustrating a partial configuraiton of a hardware configuration for supporting the touch control function according to the embodiment of the present invention.

Referring to FIG. 3, the touch module 143 of the present invention may include a panel module 40 and a key module 50. A touchscreen panel 43 of the panel module 40 and a touch key 51 of the key module 50 may be continuously formed. For example, the touch module 143 may be provided in the form of one board and divided into areas, and the touchscreen panel 43 of the panel module 40 and the touch key 51 of the key module 50 may be provided therein. Alternatively, the touchscreen panel 43 and the touch key 51 may also be provided in separate areas, respectively. The board may be made of various materials including glass, transparent plastic and the like.

The panel module 40 may include a panel management part 41 and the touchscreen panel 43. The touchscreen panel 43 is a panel for detecting a contact when a finger and the like of a user make contact with a touch object. Such a touchscreen panel 43 may have a structure in which a plurality of capacitive elements are arranged in a matrix form. Alternatively, the touchscreen panel 43 may employ one of various schemes including a resistive scheme, an electromagnetic induction scheme and the like.

The panel management part 41 may be an element for supplying power for managing the touchscreen panel 43 and collecting a touch event based on a touch object contact. For example, when the touchscreen panel 43 includes capacitive elements, the panel management part 41 may supply power for managing the capacitive elements. The panel management part 41 may collect a touch event having occurred in the touchscreen panel 43. To this end, the panel management part 41 may include signal collection lines for touch detection sensors arranged in a matrix form. Furthermore, the panel management part 41 may collect a position of a touch event based on signals collected by the signal collection lines, and provide the collected position to the control unit 160.

A specific port (for example, an IO port) of the panel management part 41 may be connected to the error control line 111. When a specific signal of the communication unit 110 is transferred through the error control line 111, the panel management part 41 may invalidate a touch event collected at a corresponding time point. For example, when a state of the IO port in a "Low" state connected to the error control line 111 is changed to a "High" state, the panel management part 41 may not transfer a touch event collected at a corresponding time point to the control unit 160 or suppress the occurrence of a touch event. That is, when the specific signal is transferred through the error control line 111, the panel management part 41 may suppress the occurrence of a touch event in the touchscreen panel 43, or suppress the transfer of a touch event having occurred in the touchscreen panel 43. To this end, routines for realizing the aforementioned functions may be embedded in the panel management part 41.

The key module 50 may include a key management part 53 and the touch key 51. The touch key 51 may include elements that generate touch key events based on touch object contacts. The touch key 51 may have a structure in which at least one capacitive element is arranged in a matrix form similarly to the touchscreen panel 43, or is arranged in a predetermined area defined in advance. Touch sensing elements constituting the touch key 51 may be the same as the elements constituting the touchscreen panel 43. Alternatively, the elements constituting the touch key 51 may be different from the elements constituting the touchscreen panel 43.

The key management part 53 may be a hardware device for managing the touch key 51. The key management part 53 may control power supply for managing the touch sensing elements arranged in a predetermined area, and event collection according to the presence or absence of touch contacts of the touch sensing elements. Similarly to the panel management part 41, the key management part 53 may also include an IO port connected to the error control line 111. The key management part 53 may have embedded routines for performing a touch event process according to the state of the IO port connected to the error control line 111. When the specific signal of the communication unit 110 is transferred through the error control line 111, the key management part 53 may suppress the occurrence of a touch event in the touch key 51, or suppress the transfer of a touch event having occurred in the touch key 51.

In the aforementioned description, the touch module 143 includes the panel module 40 and the key module 50; however, the present invention is not limited thereto. That is, the touch module 143 may have only the panel module 40 or only the key module 50. When the key module 50 is not separately provided, the electronic device 100 may have button keys. Furthermore, in the touch module 143, the panel management part 41 and key management part 53 are separately provided; however, the present invention is not limited thereto. That is, the panel management part 41 and key management part 53 may be provided as one touch management part.

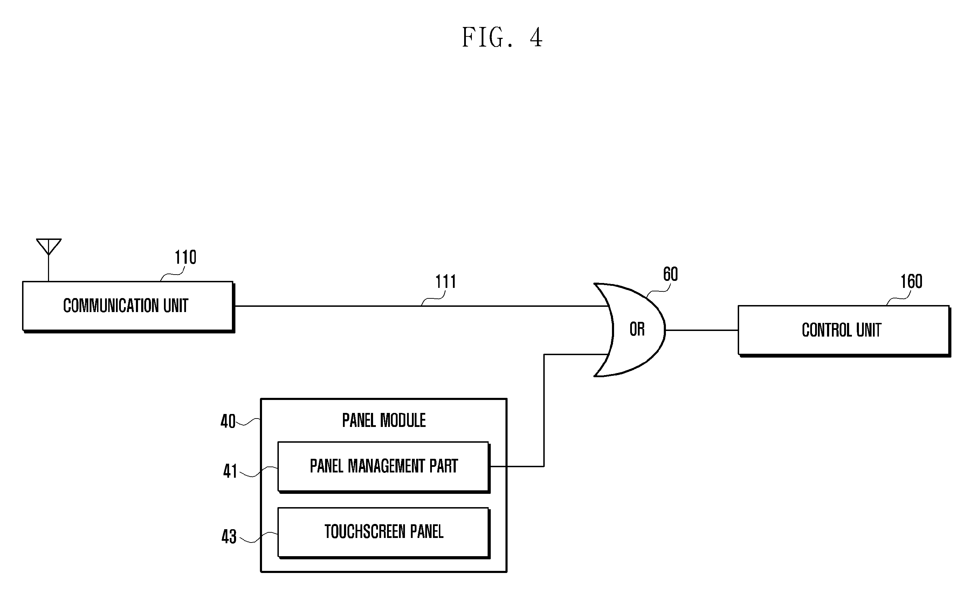

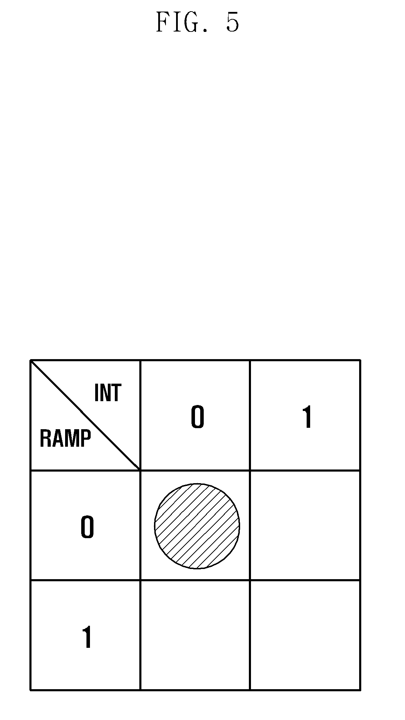

FIG. 4 is a diagram illustrating a touch control configuration according to another embodiment of the present invention. FIG. 5 is a truth table for explaining the touch control configuration according to another embodiment of the present invention.

Referring to FIG. 4, the touch control configuration according to another embodiment of the present invention may include hardware having the communication unit 110, the touch module 143, a logic gate 60, and the control unit 160.

In such a touch control configuration of the present invention, the error control line 111 may be arranged between the communication unit 110 and the logic gate 60. The error control line 111 may directly transfer a communication-related signal generated in the communication unit 110 to the logic gate 60. For example, the error control line 111 may transfer a RAMP signal generated in the communication unit 110 to the logic gate 60. When the RAMP signal is transferred to to the logic gate 60, the logic gate 60 may logically recognize a state, in which the RAMP signal is provided, as a state of "1". Furthermore, the logic gate 60 may recognize a state, in which the RAMP signal is not transferred, as a state of "0".

One end of the logic gate 60 may be connected to the touch module 143. In another embodiment of the present invention, when the touch module 143 includes only the panel module 40, a part of the output of the panel management part 41 may be provided to the logic gate 60. The logic gate 60 may have a logic state value corresponding to a signal provided by the panel management part 41. For example, the logic gate 60 may recognize a state, in which a "Low" signal is received from the panel management part 41 or a signal value corresponding to a change in specific capacitance is received, as a state of "0". When a "High" signal is received from the panel management part 41 or a signal provided in the state in which no change occurs in separate capacitance is received, the logic gate 60 may recognize it as a state of "1". The logic states of "1" and "0" may be changed according to the intention of a designer. For example, the panel management part 41 may be designed to provide a "High" signal to the logic gate 60 when there is no touch, and to transfer a "Low" signal to the logic gate 60 when a touch occurs, and an oppsite case may also be designed. For example, the logic gate 60 may receive a "Low" signal when there is no touch and a "High" signal when a touch occurs according to the adjustment of a design scheme.

When signals are received from the communication unit 110 and the panel management part 41, the logic gate 60 may support a touch event process of the panel management part 41 according to values of the received signals on the basis of the truth table in FIG. 5. A signal line for providing a touch event may be further provided between the panel management part 41 and the control unit 160. The output of the logic gate 60 may be transferred to the control unit 160.

When the output of the logic gate 60 corresponds to a specific value defined in advance, the control unit 160 may perform a process for a touch event provided by the panel management part 41. For example, when the logic gate 60 outputs a value of "0", the control unit 160 may process a touch event provided by the panel management part 41, on the basis of the truth table.

In FIG. 4, the logic gate 60 is provided in the form of an "OR" gate; however, the present invention is not limited thereto. That is, the aforementioned logic gate 60 may be replaced with a combination of an "AND gate and an inverter" or a "NAND gate". As described above, when a signal output scheme of the panel management part 41 is changed, the type of the logic gate 60 may be changed. Accordingly, the logic gate 60 of the present invention is not limited to a specific type, and it is sufficient if the logic gate 60 is a circuit, an element, or a device capable of transferring a specific signal value defined in advance to the control unit 160 such that a touch event provided by the panel management part 41 is ignored when a RAMP signal is provided from the communication unit 110.

In the aforementioned description, only one logic gate 60 is arranged, but an additional logic gate may also be further provided when the touch module 143 includes the key module 50 as described above. Furthermore, when the electronic device 100 of the present invention includes an additional touch device, an additional logic gate may be further provided in order to prevent an error due to signal interference between the corresponding touch device and the communication unit 110. In this case, the logic gate may be an element for reducing the number of signal values provided to the control unit 160. That is, when the control unit 160 has sufficient signal input/output ports, the aforementioned logic gate may not be provided. Furthermore, the error control line 111 for providing a RAMP signal of the communication unit 110 may be directly connected to the control unit 160. Then, the control unit 160 may invalidate a touch event provided by the touch module 143 when the RAMP signal is provided from the communication unit 110.

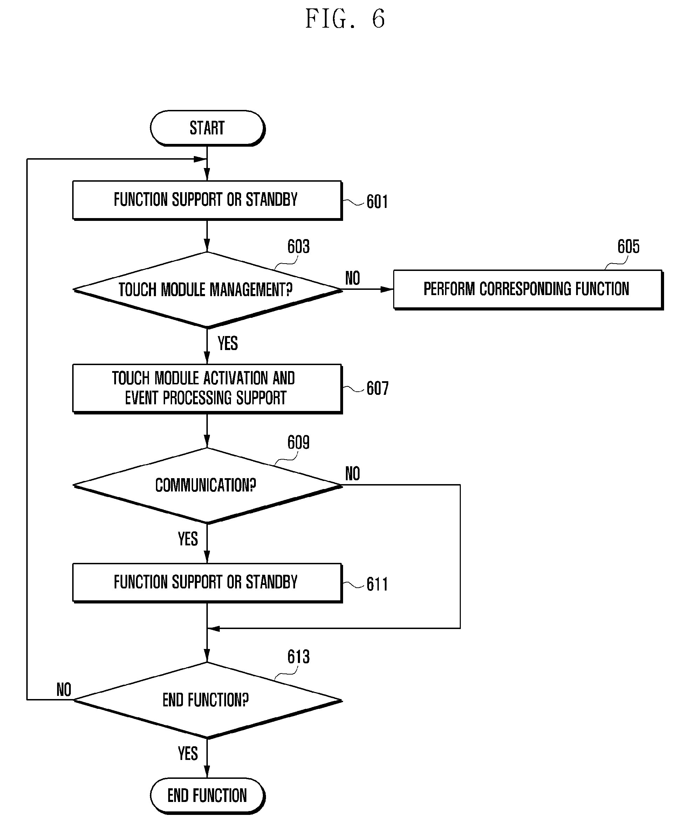

FIG. 6 is a diagram for explaining a touch cotnrol method according to the embodiment of the present invention.

Referring to FIG. 6, in the touch cotnrol method of the present invention, the control unit 160 of the electronic device 100 may perform function support or function standby in operation step 601. For example, the control unit 160 may perform booting and initialization of the electronic device 100 for power from a power supply. When the booting and initialization has been completed, the control unit 160 may perform a characteristic function according to schedule information defined in advance or user input. Then, the control unit 160 may control a screen based on the management of the corresponding function to be output to the display unit 140.

Next, in operation step 603, the control unit 160 may confirm whether there is an event for managing the touch module 143. At this time, where there is no event, the control unit 160 may perform corresponding function support in operation step 605. For example, the control unit 160 may control a music play function being previously managed to be maintained as background processing. The control unit 160 may control a sleep function being previously managed to be maintained. The control unit 160 may support a specific function state of the electronic device 100 in which the touch module 143 is not managed.

When there is the event for managing the touch module 143 in operation step 603, the control unit 160 may perform touch module activation and event processing support in operation step 607. For example, when an input event for turn-on of the display unit 140 occurs, the control unit 160 may support the activation of the touch module 143. Then, the control unit 160 may support a process based on a touch event having occurred in the touch module 143. For example, when a touch event of an icon or menu selection for gallery function activation occurs, the control unit 160 may activate a gallery function according to the corresponding touch event. Then, the control unit 160 may control a screen based on the gallery function support to be output to the display unit 140. Furthermore, when a touch event of an icon or menu selection for phone book function activation occurs, the control unit 160 may perform the phone book function activation. Then, the control unit 160 may control a phone book screen to be output to the display unit 140.

In operation step 609, the control unit 160 may confirm whether there is a communication-related event. For example, the control unit 160 may confirm whether a specific item is selected in a phone book screen and a dialing function is activated. Alternatively, the control unit 160 may confirm whether there is an event for requesting a communication connection with a specific user according to the utilization of a voice recognition-based input function. Alternatively, the control unit 160 may confirm whether there is an event for automatically requesting a communication connection by schedule information defined in advance. In this case, the communication connection may include at least one of a voice communication connection and a video communication connection. Furthermore, the communication connection may include a data communication-based communication connection. For example, the communication connection may include a chatting service-based data communication connection.

When there is the communication-related event, the control unit 160 may control an error process related to a touch event in operation step 611. In more detail, the control unit 160 may control information on a cycle, at which a transmission signal is output from the communication unit 110, to be collected. Then, the control unit 160 may invalidate a touch event collected when the transmission signal has been output. The control unit 160 may perform a normal process for a touch event collected when the transmission signal has not been output. When there is no communication-related event in operation step 609, the control unit 160 may return to operation step 607 or proceed to operation step 613, and control operation step 607 or operation step 613 to be performed.

Next, in operation step 613, the control unit 160 may confirm whether there is an event for ending the function. When there is no event for ending the function, the control unit 160 may return to operation step 601 and support the following process to be performed again. When there is the event for ending the function, the control unit 160 may end the function. Accordingly, the electronic device 100 may shift the touch module 143 to a deactivated state or a sleep state. Alternatively, the electronic device 100 may enter a turn-off state.

As described above, in accordance with the touch control method and the electronic device supporting the same according to the embodiment of the present invention, a touch event process is invalidated while a specific signal generated in the communication unit 110 is being output, so that it is possible to effectively prevent the occurrence of a touch error that may occur while the communication unit 110 is being managed. The specific signal generated in the communication unit 110 may be a signal that may generate an error in the touch module 143. For example, an error of the touch module 143 described in the present invention may occur when a specific frequency band of a signal transmitted from the communication unit 110 is similar to a frequency band used in order to drive the touch module 143.

In the above description, the RAMP signal and the like have been described as a signal that may generate a touch error, and the GSM communication module and the like have been described; however, the present invention is not limited to a management signal or a frequency of a specific communication unit, or a type of a specific communication module. In the touch control technology of the present invention, a touch event occurring in the touch module 143 is invalidated at the time point at which a signal of a frequency, which is similar to a driving frequency of the touch module 143, or a signal of a frequency band, which may generate an error in the driving of the touch module 143, is output from the communication unit 110.

The signal of the communication unit 110 may be periodically generated as described above, or may be non-periodically generated accoridng to situations.

In the touch control technology of the present invention, the error cotnrol line 111 may be arranged between the communication unit 110 and the control unit 160, or between the communication unit 110 and the touch module 143. Then, a specific signal generated from the communication unit 110 may be transferred to the control unit 160 or the management part. When the specific signal of the communication unit 110 is periodically or non-periodically generated, the management part may be driven to prevent a touch event at a corresponding time point from being transferred to the control unit 160, or the control unit 160 may invalidate the touch event at the corresponding time point. Through such a scheme, the touch control technology of the present invention can suppress error generation of a more direct touch event. Furthermore, the touch control technology of the present invention can statistically process touch errors already generated, thereby removing an error generated. In addition, the touch control technology of the present invention can process error generation of the touch module 143 with respect to the generation of a non-periodic specific signal of the communication unit 110.

On the other hand, the above-mentioned electronic device 100 may further include various and additional modules according to their type. Namely, when being used as a communication terminal, at least one of the APP operating device 100 and the APP output device 200 may also further include unmentioned configurations such as a near field communication module for near field communication, an internet communication module for performing an internet function by communicating with an internet network, a digital broadcasting module for performing functions of receiving and reproducing digital broadcasting and the like. These elements may be variously modified according to the convergence trend of digital devices, and cannot be all enumerated. However, the electronic device 100 may further include elements equivalent to the above-described elements. Further, in the electronic device of the present invention, specific structural elements may be excluded from the above-mentioned configuration or substituted with other structural elements according to their type. This can be easily understood by one skilled in the art.

Also, examples of the electronic device according to embodiments of the present disclosure may include all types of information communication devices, all types of multimedia devices, and application devices for all types of the information communication devices and all types of the multimedia devices, such as all mobile communication terminals operating based on communication protocols matched to various communication systems, a Portable Multimedia Player (PMP), a digital broadcast player, a Personal Digital Assistant (PDA), a music player (e.g., an MP3 player), a portable game console, a smart phone, a laptop computer, a handheld PC, and the like.

Meanwhile, although exemplary embodiments of the present invention have been shown and described in this specification and the drawings, they are used in general sense in order to easily explain technical contents of the present invention, and to help comprehension of the present invention, and are not intended to limit the scope of the present invention. It is obvious to those skilled in the art to which the present invention belongs that other modifications can be established without departing from the technical spirit of the present invention.

## Claims

1. An electronic device comprising:
a communication unit for transmitting a specific signal;
a touch module for generating a touch event based on a touch; and
an error control line for connecting the communication unit to the touch module,
wherein, when the specific signal is received through the error control line, the touch module invalidates the touch event.

2. The electronic device of claim 1, wherein the touch module comprises at least one of:
a panel module including a touchscreen panel and a panel management part for managing the touchscreen panel; and
a key module including a touch key and a key management part for managing the touch key.

3. The electronic device of claim 2, wherein the error control line is connected to at least one of the panel management part and the key management part.

4. The electronic device of claim 3, wherein, when the specific signal is received through the error control line, the panel management part suppresses occurrence of a touch event in the touchscreen panel or suppresses transfer of a touch event having occurred in the touchscreen panel.

5. The electronic device of claim 3, wherein, when the specific signal is received through the error control line, the key management part suppresses occurrence of a touch event in the touch key or suppresses transfer of a touch event having occurred in the touch key.

6. The electronic device of claim 1, wherein the specific signal has a frequency similar to a driving frequency of the touch module, or is a signal of a frequency band in which an error is generated in the driving frequency of the touch module.

7. A touch control method comprising:
a management operation of a communication unit in an activation state of a touch module; and
a processing operation for invalidating a touch event occurring in the touch module when the communication unit transmits a specific signal.

8. The touch control method of claim 7, further comprising:
a transfer operation for transferring a specific signal generated according to management of the communication unit to the touch module; and
an invalidation processing operation for invalidating a touch event that occurs when the touch module receives the specific signal.

9. The touch control method of claim 8, wherein the invalidation processing operation comprises at least one of:
a processing operation in which the touch module suppresses occurrence of the touch event; and
an operation for preventing a touch event having occurred in the touch module from being transferred to a control unit.

10. The touch control method of claim 7, further comprising:
a transfer operation for transferring, to a control unit, the specific signal generated according to the management of the communication unit and the touch event occurring in the touch module.

11. The touch control method of claim 10, wherein the processing operation comprises:
an operation in which the control unit invalidates a touch event transferred from the touch module when the specific signal is generated.

12. The touch control method of claim 7, further comprising:
an operation for transferring, to a logic gate, a specific signal generated according to management of the communication unit and the touch event occurring in the touch module; and
an operation in which a logic gate transfers the specific signal and a specific output value based on touch event transfer to a control unit.

13. The touch control method of claim 7, wherein the processing operation comprises:
an operation in which a control unit invalidates the touch event, which occurs in the touch module, according to an output value of a logic gate.

14. The touch control method of claim 7, wherein the specific signal generated in the communication unit has a frequency similar to a driving frequency of the touch module, or is a signal of a frequency band in which an error is generated in the driving frequency of the touch module.

15. The touch control method of claim 7, wherein the specific signal includes a RAMP signal.
